# EUROPÄISCHE PATENTANMELDUNG

(11) **EP 1 407 931 A1**
(43) Veröffentlichungstag der Anmeldung: **14.04.2004**
(21) Anmeldenummer: 03020405.1
(22) Anmeldetag: 10.09.2003
(51) Int. Cl.: B60R 1/00, G08G 1/16

(54) **Verfahren und System zur Unterstützung eines Fahrers**

(30) Priorität: 11.10.2002 DE 10247563
(71) Anmelder: Valeo Schalter und Sensoren GmbH, 74321 Bietigheim-Bissingen (DE)
(72) Erfinder: Mathes, Joachim, 74080 Heilbronn (DE)
(74) Vertreter: Dreiss, Fuhlendorf, Steimle & Becker

(57) **Zusammenfassung**

Verfahren und System zur Unterstützung des Fahrers eines Fahrzeuges, insbesondere zur Erhöhung der Sicherheit bei Nachtfahrten und Fahrten bei schlechter Sicht, mit einer Kamera (14) zur Erfassung zumindest eines Teils des Umfeldes des Fahrzeuges und mit einer Anzeigeeinrichtung (20,22) zur Anzeige des von der Kamera erfassten Umfeldes.

Mittels einer Datenverarbeitungsanlage (18) werden von der Kamera (14) erfasste Gefährdungsobjekte, auf der Anzeigeeinrichtung augenfälliger dargestellt, als diejenigen Objekte, die keine Gefährdung darstellen.

## Beschreibung

Die Erfindung betrifft ein Verfahren zur Unterstützung des Fahrers eines Fahrzeuges, insbesondere zur Erhöhung der Sicherheit bei Nachtfahrten und Fahrten bei schlechter Sicht, mit einer Kamera zur Erfassung zumindest eines Teils des Umfeldes des Fahrzeuges und mit einer Anzeigeeinrichtung zur Anzeige des von der Kamera erfassten Umfeldes. Die Erfindung betrifft außerdem ein System zur Durchführung des Verfahrens.

Derartige Systeme sind als Night-Vision-Systeme bekannt, die in der Regel mittels einer Infrarot-Kamera das Fahrzeugumfeld erfassen. Das Infrarotbild wird dem Fahrzeuglenker mittels einer Anzeigeeinrichtung angezeigt. Der Fahrzeuglenker muss hierbei das Bild betrachten und darüber entscheiden, ob Gefährdungsobjekte, die eine mögliche Gefährdung des Fahrzeuges darstellen, angezeigt werden.

Der vorliegenden Erfindung liegt deshalb die Aufgabe zugrunde, ein Verfahren und ein System bereitzustellen, das den Fahrzeuglenker möglichst nicht ablenkt, und dennoch zur Sicherheit, insbesondere bei Nachtfahrten, oder bei Fahrten bei schlechter Sicht, beiträgt.

Diese Aufgabe wird durch ein eingangs genanntes Verfahren gelöst, dass sich dadurch kennzeichnet, dass mittels einer Datenverarbeitungsanlage von der Kamera erfasste Gefährdungsobjekte, die eine mögliche Gefährdung des Fahrzeuges darstellen, auf der Anzeigeeinrichtung augenfälliger dargestellt werden, als diejenigen Objekte, die keine Gefährdung darstellen. Dies hat den Vorteil, dass der Fahrzeuglenker bei Betrachtung der Anzeigeeinrichtung sofort erkennt, ob Gefährdungsobjekte von der Kamera erfasst werden. Objekte die nicht gefährdungs- oder kollisionsrelevant sind, werden weniger augenfälliger dargestellt. Gefährdungsobjekte können sein Fußgänger, Tiere, entgegenkommende Fahrzeuge, größere Gegenstände auf der Fahrbahn oder dergleichen.

Dabei wird die Augenfälligkeit beispielsweise durch eine graphische Hervorhebung, durch eine geeignete Farbe, durch eine geeignete Helligkeit, durch einen geeigneten Kontrast, durch zusätzliche Symbole oder Markierungen, durch eine geeignete Animation oder dergleichen erreicht. Gefährdungsobjekte können beispielsweise durch ein rotes Warndreieck markiert werden. Schon bei kurzem Hinsehen nimmt der Fahrzeuglenker wahr, ob und wo Gefährdungsobjekte vorhanden sind.

Zur Unterscheidung zwischen Gefährdungsobjekten und sonstigen Objekten kann eine Detektierung Verwendung finden. Die Detektierung kann hierbei die Kontur, die Größe, die Beschaffenheit, den Ort, die Geschwindigkeit und/oder die Bewegungsrichtung der im erfassten Umfeld vorhandenen Objekte bestimmen. Insbesondere aufgrund der Größe, dem Ort, der Geschwindigkeit und der Bewegungsrichtung kann die Kollisionswahrscheinlichkeit, und damit der Gefährdungsgrad, ermittelt werden. Objekte, die sich nicht bewegen, und außerhalb des Straßenverlaufs liegen, können als Nichtgefährdungsobjekte erkannt werden. Objekte, die im Straßenverlauf detektiert werden, sind in der Regel Gefährdungsobjekte. Objekte, die außerhalb des Straßenverlaufs mit einer Bewegungsrichtung zum Straßenverlauf und einer entsprechenden Geschwindigkeit detektiert werden, können unter Umständen Gefährdungsobjekte sein. Der Straßenverlauf als solcher kann mit bekannten Spurerkennungssystemen bestimmt werden.

Bei einer bevorzugten Ausführungsform der Erfindung erfolgt die Detektierung mittels eines das jeweilige Umfeld erfassenden Lidarsystems und/oder Radarsystems. Die Verwendung von Lidar- und/oder Radarsystemen hat den Vorteil, dass insbesondere die Größe, der Ort, die Geschwindigkeit und/oder die Bewegungsrichtung der erfassten Objekte bestimmbar ist. Durch die Überlagerung der Informationen, die die Kamera liefert, und der Informationen, die das Lidar- und/oder Radarsystem liefert, kann bestimmt werden, bei welchen der angezeigten Objekte es sich um Gefährdungsobjekte handelt. Aufgrund der entsprechenden Datenverarbeitung werden diese Objekte augenfällig dargestellt.

Erfindungsgemäß ist auch denkbar, dass die Detektierung mittels einer in die Bildverarbeitungsanlage implementierten Software erfolgt. Hierbei ist es nicht erforderlich, ein Lidar- oder Radarsystem vorzusehen. Aufgrund der bekannten Geschwindigkeit und Bewegungsrichtung des Fahrzeuges kann bestimmt werden, ob die erfassten Objekte sich bewegen und ob die Bewegungsrichtung in Richtung des Straßenverlaufs erfolgt. Ferner kann bestimmt werden, ob eine Kollisionsgefahr besteht. Vorteilhaft ist, wenn zur Detektierung zum einen ein Lidar- oder Radarsystem und zum anderen eine entsprechende Software vorgesehen ist.

Ferner vorteilhaft ist, wenn beim Auftreten eines Gefährdungsobjekts, beziehungsweise bei der Detektierung eines Gefährdungsobjekts, ein akustisches Warnsignal gegeben wird. Das Warnsignal soll den Fahrzeuglenker dazu veranlassen, die Anzeigeeinrichtung zu betrachten, um feststellen zu können, wo sich das Gefährdungsobjekt befindet. Dadurch wird der Fahrzeuglenker vom eigentlichen Fahrgeschehen nur dann abgelenkt, wenn tatsächlich ein Gefährdungsobjekt erkannt wird.

Zusätzlich ist denkbar, dass das Warnsignal angibt, in welche Richtung, oder von welcher Richtung kommend, das Gefährdungsobjekt auftritt. Hierdurch wird erreicht, dass der Fahrzeuglenker, wenn überhaupt, nur einen kurzen Blick auf die Anzeigeeinrichtung werfen muss.

Ferner ist erfindungsgemäß denkbar, dass von der Kamera die Straße und der an die Straße angrenzende Bereich erfasst wird. Vorteilhafterweise wird hierbei der vor dem Fahrzeug liegende Bereich überwacht.

Um lediglich den für das Fahrzeug relevanten Bereich zu erfassen, ist denkbar, dass das von der Anzeigeeinrichtung dargestellte Bild dem Straßenverlauf folgt. Dabei ist denkbar, dass das dargestellte Bild in Abhängigkeit eines Lenkwinkelsignals und/oder eines Spurerkennungssignals dem Straßenverlauf folgt. Dies kann beispielsweise durch eine entsprechende Programmierung oder durch Verschwenken der Kamera realisiert werden.

Vorteilhafterweise wird von der Anzeigeeinrichtung lediglich der Ausschnitt von dem von der Kamera erfassten Bereich angezeigt, in dem sich die Straße befindet. Wird eine Kamera verwendet, die eine Optik mit einem relativ großen Weitwinkel aufweist, so ist es vorteilhaft, lediglich den Ausschnitt anzuzeigen, der den Straßenverlauf wiedergibt. Der entsprechende Ausschnitt kann hierbei abhängig sein vom Lenkwinkel des Fahrzeuges und/oder von der Fahrzeuggeschwindigkeit.

Die eingangs genannte Aufgabe wird außerdem durch ein System zur Sichtunterstützung des Fahrers gelöst, das sich dadurch kennzeichnet, dass von der Kamera erfasste Gefährdungsobjekte, die eine mögliche Gefährdung des Fahrzeugs darstellen, auf der Anzeigeeinrichtung augenfälliger dargestellt werden, als diejenigen Objekte, die keine Gefährdung darstellen. Ein derartiges System ist zur Durchführung des erfindungsgemäßen Verfahrens geeignet.

Dabei ist denkbar, dass die Kamera eine Infrarot-Kamera ist. Die Infrarot-Kamera kann hierbei aktiv oder passiv sein. Bei einer aktiven Infrarot-Kamera wird ein von einem Infrarot-Projektor erzeugtes Licht an den Objekten reflektiert. Bei einer passiven Infrarot-Kamera wird die Wärmestrahlung gemessen, die von den Objekten ausgeht. Das System kann außerdem eine Detektierung zur Unterscheidung zwischen Gefährdungsobjekten und sonstigen Objekten aufweisen. Die Detektierung kann beispielsweise ein Lidarund/oder Radarsystem sein. Ferner ist denkbar, dass die Detektierung als Softwarelösung ausgeführt ist. Zusätzlich zum Anzeigegerät kann das System eine akustische Ausgabeeinheit umfassen. Ferner ergibt sich dann ein vorteilhaftes System, wenn das System mit einem Lenkwinkelsensor, einem Geschwindigkeitssensor und/oder einem Fahrbahnerkennungssystem gekoppelt ist.

Weitere vorteilhafte Einzelheiten der Erfindung sind der folgenden Beschreibung zu entnehmen, in der die Erfindung anhand der in der Figur dargestellten Ausführungsformen näher beschrieben und erläutert ist.

Es zeigen:
- Figur 1: ein erfindungsgemäßes System in schematischer Darstellung;
- Figur 2: ein Fahrzeug mit einem erfindungsgemäßen System auf einer Straße in Vogelperspektive; und
- Figur 3: die Anzeigeeinheit des Fahrzeugs gemäß Figur 2 mit dem erfindungsgemäßen System.

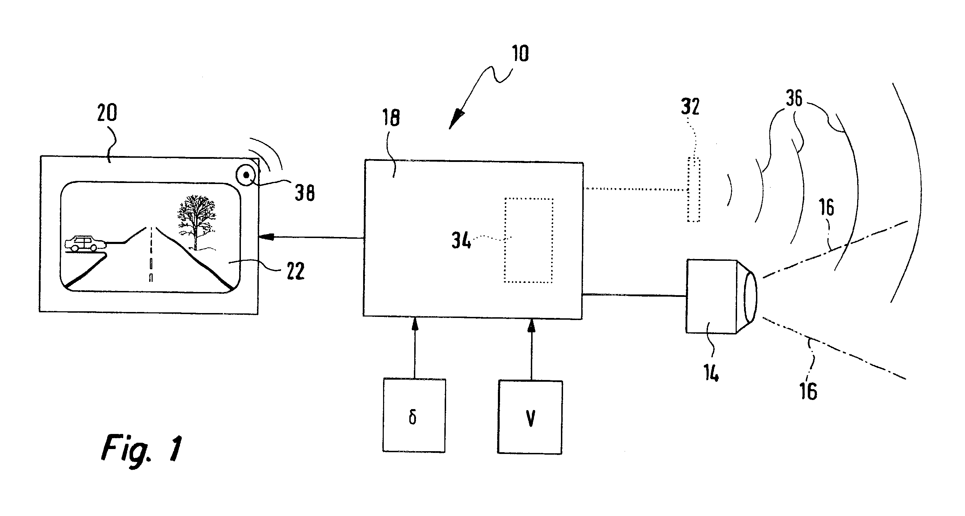

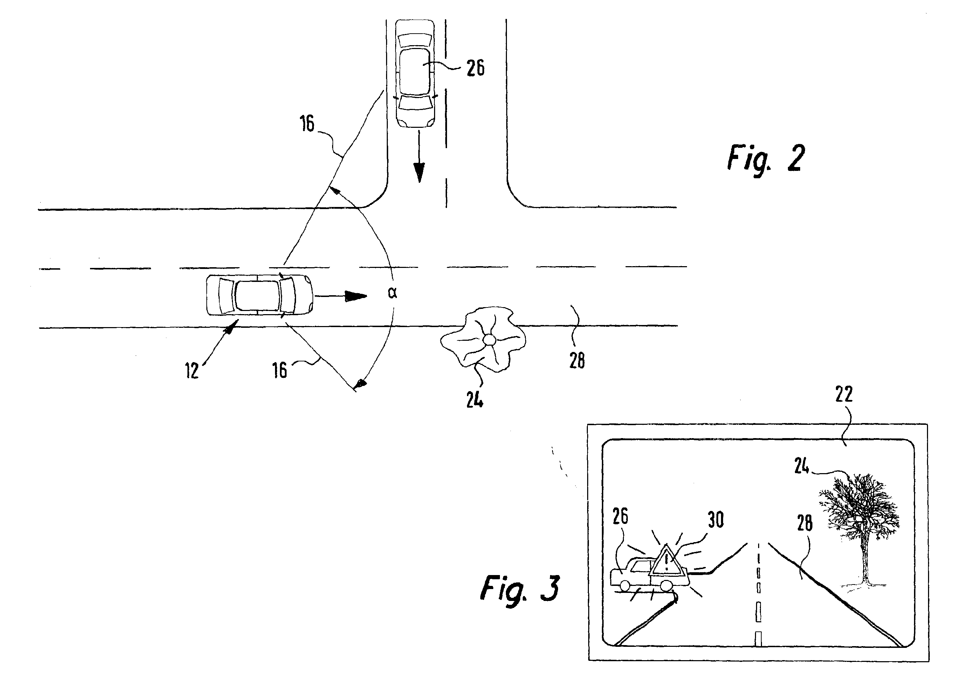

In der Figur 1 ist ein erfindungsgemäßes System 10, insbesondere ein Night-Vision-System zur Sichtunterstützung des Fahrers eines Fahrzeuges, das in der Figur 2 mit der Bezugszahl 12 gekennzeichnet ist, dargestellt. Das System 10 umfasst eine Kamera 14, insbesondere eine Infrarot-Kamera. Die Kamera 14 erfasst das vor dem Fahrzeug 12 liegende Umfeld, wobei das erfasste Umfeld von den Umfeldgrenzen 16 begrenzt wird. Der Kamera 14 ist eine Datenverarbeitungsanlage 18 nachgeschaltet. Der Datenverarbeitungsanlage 18 wiederum ist eine Anzeigeeinrichtung 20 nachgeschaltet, die so angeordnet ist, dass der Fahrzeuglenker beim Führen des Fahrzeuges das Display 22 wahrnehmen kann. Das erfindungsgemäße System 10 wird so betrieben, dass von der Kamera erfasste Objekte, die eine mögliche Gefährdung des Fahrzeuges darstellen, augenfälliger dargestellt werden, als die sonstigen, auf dem Display 22 dargestellten Objekte.

Auf dem Display 22, das in der Figur 3 vergrößert dargestellt ist, ist beispielsweise ein Baum 24 und ein anderes Fahrzeug 26, dargestellt.

Wie aus Figur 2 zu erkennen ist, bewegt sich das Fahrzeug 26 in Richtung des Straßenverlaufes 28 des das System 10 aufweisenden Fahrzeuges 12. Das System 10 erkennt hierbei, dass es sich bei dem Baum 24 um ein unbewegtes Objekt handelt, das folglich keine Gefährdung für das Fahrzeug 12 darstellt. Ferner erkennt das System 10, dass sich das Fahrzeug 26 in Richtung des Straßenverlaufs 28 des Fahrzeugs 12 bewegt, und damit das Fahrzeug 12 gefährden könnte. Bei dem Fahrzeug 26 handelt es sich folglich um ein Gefährdungsobjekt. Aus diesem Grund wird gemäß Figur 3 auf dem Display 22 im Bereich des Fahrzeugs 26 ein rot hervorgehobenes, blinkendes Warnzeichen 30 angezeigt. Die Anzeige des Warnzeichens 30 ist augenfälliger als die Darstellung der Straße 28 oder des Baumes 24. Beim Blick auf das Display erhält der Fahrzeuglenker sofort die Information, dass ein Gefährdungsobjekt vorhanden ist.

Werden alle auf dem Display 22 dargestellten Objekte mit gleicher Augenfälligkeit angezeigt, wie es aus dem Stand der Technik bekannt ist, so hat der Fahrer das auf dem Display 22 dargestellte Bild genau zu analysieren, um entscheiden zu können, welches der dargestellten Objekte 24, 26 eine Gefährdung darstellen könnte. Der Fahrzeuglenker wird folglich abgelenkt. Zudem verstreicht in einer Gefahrensituation kostbare Zeit.

Zur Unterscheidung, ob es sich bei den erfassten Objekten 24, 26 um Gefährdungsobjekte oder sonstige Objekte handelt, weist das System 10 eine Detektierung in Form eines Radarsystems 32 und einer entsprechenden Software 34 auf, die in die Datenverarbeitungsanlage 18 implementiert ist. In der Figur 1 sind das Radarsystem 32 und die Software 34 gestrichelt dargestellt, da erfindungsgemäß auch denkbar ist, dass entweder das Radarsystem 32 oder die Software 34 zur Detektierung der Gefährdungsobjekte ausreichen kann.

Das Radarsystem 32 sendet und empfängt im Betrieb des Systems 10 mit dem Bezugszeichen 36 angedeutete Hochfrequenzsignale. Das Radarsystem 32 erfasst im Wesentlichen den gleichen Bereich wie die Infrarot-Kamera 14. Aufgrund einer entsprechenden Auswertung der Signale 36 kann insbesondere die Größe, der Ort, die Geschwindigkeit und die Bewegungsrichtung der erfassten Objekte 24, 26 bestimmt werden. Bei Überlagerung des mit der Kamera 14 erfassten Bildes, das insbesondere den Straßenverlauf, beziehungsweise die Straßenbegrenzungslinien, erkennt, kann mittels der Datenverarbeitungsanlage 18 bestimmt werden, ob ein Objekt 24, 26 ein Gefährdungsobjekt oder ein sonstiges Objekt ist. Wird ein Objekt als Gefährdungsobjekt 26 detektiert, so wird es mittels des Warnzeichens 30 augenfällig hervorgehoben. Wird ein Gefährdungsobjekt 26 detektiert, so wird zusätzlich über einen an der Anzeigeeinheit 20 angeordneten Lautsprecher 38 ein akustisches Signal gegeben, um den Fahrzeuglenker zu warnen.

Die Kamera 14 und das Radarsystem 32 sind vorteilhafterweise so ausgelegt, dass sie einen relativ großen Öffnungswinkel α aufweisen, um sich auf die Fahrbahn 28 zubewegende Gefährdungsobjekte zu erfassen. Dabei ist vorteilhaft, wenn lediglich der Ausschnitt des erfassten Umfeldes auf dem Display 22 dargestellt wird, in dem sich der Straßenverlauf 28 befindet. Um insbesondere bei Kurvenfahrten den entsprechenden Ausschnitt darstellen zu können, kann es vorteilhaft sein, wenn die Datenverarbeitungsanlage 18 als Eingangsgrößen ein Lenkwinkelsignal δ und ein Geschwindigkeitssignal v des Fahrzeuges erhält.

## Patentansprüche

1. Verfahren zur Unterstützung des Fahrers eines Fahrzeuges (12), insbesondere zur Erhöhung der Sicherheit bei Nachtfahrten und Fahrten bei schlechter Sicht, mit einer Kamera (14) zur Erfassung zumindest eines Teils des Umfeldes des Fahrzeuges (12) und mit einer Anzeigeeinrichtung (20, 22) zur Anzeige des von der Kamera (14) erfassten Umfeldes, **dadurch gekennzeichnet, dass** mittels einer Datenverarbeitungsanlage (18) von der Kamera (14) erfasste Gefährdungsobjekte (26), die eine mögliche Gefährdung des Fahrzeugs (12) darstellen, auf der Anzeigeeinrichtung (20, 22) augenfälliger dargestellt werden, als diejenigen Objekte (24), die keine Gefährdung darstellen.

2. Verfahren nach Anspruch 1, **dadurch gekennzeichnet, dass** die Augenfälligkeit durch eine graphische Hervorhebung, durch eine geeignete Farbwahl, durch eine geeignete Helligkeit, durch einen geeigneten Kontrast, durch zusätzliche Symbole (30) oder Markierungen, durch eine geeignete Animation oder der gleichen erreicht wird.

3. Verfahren nach Anspruch 1 oder 2, **dadurch gekennzeichnet, dass** mittels einer Detektierung (32, 34) zwischen Gefährdungsobjekte (26) und sonstigen Objekten (24) unterschieden wird.

4. Verfahren nach Anspruch 3, **dadurch gekennzeichnet, dass** die Detektierung (32, 34) die Kontur, die Größe, die Beschaffenheit, den Ort, die Geschwindigkeit und/oder die Bewegungsrichtung der im erfassten Umfeld vorhandenen Objekte (24, 26) bestimmt.

5. Verfahren nach Anspruch 3 oder 4, **dadurch gekennzeichnet, dass** die Detektierung mittels eines das jeweilige Umfeld erfassenden Lidarsystems und/oder Radarsystems (32) erfolgt.

6. Verfahren nach Anspruch 3, 4 oder 5 **dadurch gekennzeichnet, dass** die Detektierung mittels einer in die Bildverarbeitungsanlage (18) implementierten Software (34) erfolgt.

7. Verfahren nach einem der vorhergehenden Ansprüche, **dadurch gekennzeichnet, dass** bei der Detektierung eines Gefährdungsobjektes (26) ein akustisches Warnsignal gegeben wird.

8. Verfahren nach Anspruch 7, **dadurch gekennzeichnet, dass** das Warnsignal angibt, in welcher Richtung, oder von welcher Richtung kommend, das Gefährdungsobjekt (26) auftritt.

9. Verfahren nach einem der vorhergehenden Ansprüche, **dadurch gekennzeichnet, dass** von der Kamera (14) die Straße (28) und der an die Straße angrenzende Bereich erfasst wird.

10. Verfahren nach einem der vorhergehenden Ansprüche, **dadurch gekennzeichnet, dass** das von der Anzeigeeinrichtung dargestellte Bild dem Straßenverlauf (28) folgt.

11. Verfahren nach einem der vorhergehenden Ansprüche, **dadurch gekennzeichnet, dass** das dargestellte Bild in Abhängigkeit eines Lenkwinkelsignals (α) und/oder eines Spurerkennungssignals dem Straßenverlauf dem Straßenverlauf folgt.

12. Verfahren nach einem der vorhergehenden Ansprüche, **dadurch gekennzeichnet, dass** von der Anzeigeeinrichtung (20, 22) lediglich der Ausschnitt von dem von der Kamera erfassten Bereich angezeigt wird, der in dem sich die Straße (28) befindet.

13. Verfahren nach Anspruch 12, **dadurch gekennzeichnet, dass** der von der Anzeigeeinrichtung (20, 22) angezeigte Ausschnitt abhängt vom Lenkwinkel (δ) des Fahrzeuges (12) und/oder von der Fahrzeuggeschwindigkeit (v).

14. System (10) zur Sichtunterstützung des Fahrers eines Fahrzeuges (12), insbesondere zur Erhöhung der Sicherheit bei Nachtfahrten und Fahrten bei schlechter Sicht, mit einer Kamera (14) zur Erfassung des Umfeldes des Fahrzeuges (12), mit einer mit der Kamera (14) nachgeschalteten Datenverarbeitungsanlage (18) und mit einer der Datenverarbeitungsanlage nachgeschalteten Anzeigeeinrichtung (20, 22), **dadurch gekennzeichnet, dass** von der Kamera (14) erfasste Gefährdungsobjekte (26), die eine mögliche Gefährdung des Fahrzeugs (12) darstellen, auf der Anzeigeeinrichtung (20, 22) augenfälliger dargestellt werden, als diejenigen Objekte (24), die keine Gefährdung darstellen.

15. Symbol (12) nach Anspruch 14, **dadurch gekennzeichnet, dass** das System (10) zur Durchführung des Verfahrens nach einem der Ansprüche 1 bis 13 geeignet ist.

16. Symbol (10) nach Anspruch 14 oder 15, **dadurch gekennzeichnet, dass** die Kamera (14) eine Infrarotkamera ist.

17. Symbol (10) nach Anspruch 14, 15 oder 16, **dadurch gekennzeichnet, dass** das System (10) eine Detektierung (32, 34) zur Unterscheidung zwischen Gefährdungsobjekten (26) und sonstigen Objekten (24) umfasst.

18. System nach einem der Ansprüche 14 bis 17, **dadurch gekennzeichnet, dass** ein die Detektierung ein Lidarsystems und/oder Radarsystems (32) ist.

19. System nach einem der Ansprüche 14 bis 18, **dadurch gekennzeichnet, dass** die Detektierung als Software (34) ausgeführt ist.

20. System nach einem der Ansprüche 14 bis 19, **dadurch gekennzeichnet, dass** das System (10) eine akustische Ausgabeeinheit (38) umfasst.

21. System nach einem der Ansprüche 14 bis 20, **dadurch gekennzeichnet, dass** das System (10), und insbesondere die Datenverarbeitungsanlage (18), gekoppelt ist mit einem Lenkwinkelsensor, Geschwindigkeitssensor und/oder einem Fahrbahnerkennungssystem.
